# EUROPEAN PATENT APPLICATION

(11) **EP 1 253 548 A1**
(43) Date of publication of application: **30.10.2002**
(21) Application number: 01110312.4
(22) Date of filing: 26.04.2001
(51) Int. Cl.: G06K 15/00

(54) **Multi resolution printing**

(71) Applicant: Hewlett-Packard Company, A Delaware Corporation, Palo Alto, CA 94304 (US)
(72) Inventor: Obrador, Pere, 08190 Sant Cugat del Valles, Barcelona (ES)
(74) Representative: Yennadhiou, Peter

(57) **Abstract**

There is disclosed a method of generating and transmitting a multi-resolution image data file, in which successively higher resolutions of image data are sent sequentially between an image data source device, and a printer device. The printer device receives a multi-resolution image data file, and from that file prints an image at a resolution which is suitable for the amount of internal memory and/or data storage device within the printer device, and including full vector data and full text data. Using the same image data file format, the same image data file sent to a different printer device having increased memory and/or data storage capacity results in an increased resolution image data, also containing the same vector data and text data.

## Description

### Field of the Invention

The present invention relates to the field of printing.

### Background to the Invention

Conventional printers, for example large format printers used for printing posters, architectural drawings and the like, are capable of printing photograph type images and/or computer generated images, as either bitmap and/or line drawing images. Print data supplied to the printer can be photograph data, generated from for example a digital camera, or rendered data generated by a computer graphics package.

Typically, data received by a printer from a computer may include bitmap data specifying an image in the form of a bitmap, and vector data, specifying features in terms of vectors and text data specifying text characters. For example, an architects printing requirement may include a background photograph, showing a site for a building, and a computer generated image of a building, having rendered texture and tones, superimposed on the photograph image. Additionally, the image may contain arrows and text, pointing to individual features on the building, the arrows and text superimposed either over a computer generated graphics image, and/or over a photograph image.

Vector data can be converted to bitmap data prior to sending to a printer. However, in order to maintain a maximum resolution for printing, the vector data is best kept in vector format until time of printing. If the features arising from the vector data are supplied to the printer device in the form of vectors, then these features will be rendered at the highest possible resolution by the printer, which will be higher than if the same information were provided to the printer device in pixel format.

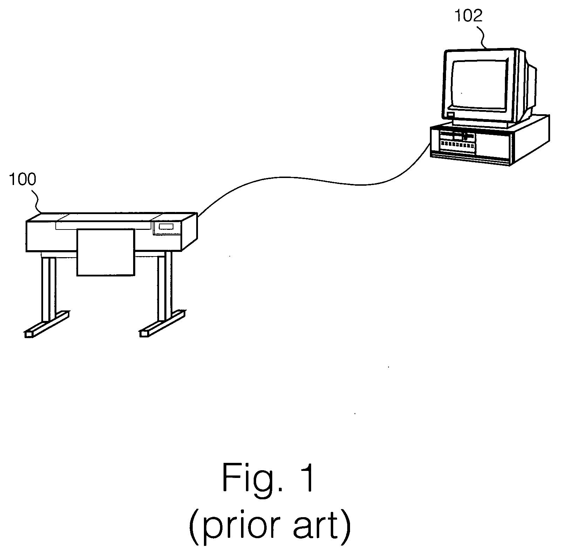

Referring to Fig.1 herein there is illustrated schematically a prior art printer device 100 for printing on large format print materials, the printer device 100 receiving print data containing information from which an image can be printed, from a print source 101, typically a computer containing a graphics package and a printer device. Typically, files of print data are sent from the print source 101 to the printer device 100 over a local area network, in a proprietary format. Typically, every time a printer device is changed, then a computer sending data to that printer has to install a different printer driver, and there is no standardized format for file transfer between the print source 101 and the printer device 100.

Conventional printer devices tend to have only the minimum necessary amount of memory, in order to reduce cost of the printer device itself. Additionally, there is an increasing trend to higher resolution printing. As resolution of image data increases, the size of image data files transferred from a source to a printer increases, particularly where bitmaps are transferred to a printer.

Conventionally, image data comprises bitmap data, vector data, and text data. Using the prior art approach to converting image and vector data to raster information, all the bitmap data must be received and stored in memory, before the vector data and/or text data is processed by the printer as the vector data could overlay anywhere on the bitmap data.

In cases where the image data fits completely within the memory of the printer this is not a problem since the driver looks at the whole of the data in the printer memory before converting this into rastered data which can be printed. However, with increasing resolution images, file sizes increase beyond the memory capacity of conventional printers, leading to a problem of the overlay data not being received before printing starts.

For example, for a recently marketed printer capable of printing to a printer media area 107 cm x 147 cm, where printing occurs at a resolution of 1200 dots per inch (DPI), then a received file size would be of the order of 2,923,200 pixels. This corresponds to a data volume of approximately 10 GigaBytes, where each pixel has RGB data.

To deal with this volume, some more recent prior art printers are provided with hard disk drive data storage, but even with hard disk drive, the data file sizes are, in some cases, unmanageable without loss of vector data in the final printed image.

For low cost products, hard disk drives are not incorporated, and a typical memory size may be 32 MegaBytes. To fit a full image data into a memory of that size would require a high amount of compression, of the order of 1000 to 1, and this is not feasible without loss of image quality.

Consequently, with a conventional printer having limited memory, which is incapable of storing a complete bitmap image data and vector data, file transfer from the source takes place into the printer memory in blocks of data. The printer receives the first block of data from the source, which is stored in the printers memory, the block being selected as the optimum size for the print memory, and rasters the image data and prints to print media, thereby emptying the memory. The printer device then receives a next block of data from the source, rasters it and prints as before, and so on until all image data has been printed. However, because the vector data is sent after the bitmap image data, this data may not be received until the end of the complete file from the source, and not be received by the printer until after it has printed images corresponding to the bitmap data. Since the vector data can overlay anywhere on an image, the vector data for a particular position on a printed image may not be received until after the bitmap image data for that image has already been printed, which means that the vector data cannot be printed and is missed from the printed image. Similarly, where there is text data, this also can be missed from the printed image.

In some applications, for example the known CorelDraw® graphics application, even where there is no vector data or text data sent, the application sends raster information in a "bottom-up" manner which means that the printer still has to receive a whole image data, before the printer device can begin to print.

Specific implementations according to the present invention aims to provide a method and apparatus to enable a printer device to handle production of prints from high resolution image data, without loss of vector information or text information, and where a memory size of the printer device is insufficient to contain a whole image data for a print image.

### Summary of the Invention

A printer device is configured to print a whole raster image with different detail levels, depending upon the amount of memory available within the printer device.

Image data is sent from a print data source in a multi resolution format.

A frame image data is sent firstly in a lower resolution format, and a printer device determines whether it should print in that low resolution format, depending upon the amount of memory available at the printer device.

Sending of low resolution image data is followed by sending a vector data and/or text data, so that the printer device initially receives a low resolution image data together with vector data and text data for any vectors or text which overlays the image data. The data source then sends the same image data frame, in higher resolution form, and then resends the same image data frame in yet higher resolution format. The image data frame is sent several times, in succession, each time at a higher resolution.

The printer device receives the low resolution image data followed by vector and/or text data, and stores it in memory. Because the image data is in low resolution format, a printer device does not need a high amount of memory to store the image data together with the vector data and text data where sent. The printer device then receives the same image data in higher resolution format, and, depending upon the amount of memory available, may store this higher resolution image data. A printer device continues to receive successively higher resolution image data, until the memory of the printer device becomes full, at which point the printer device starts printing. The printer device does not overwrite existing data in memory, but allows the incoming successively higher resolution data to be dropped on receipt if there is no room in the memory. Depending upon the size of the memory in a printer device, for high memory/data storage capacity printer devices, a highest level of sent image data is stored, and the printer can proceed to print the highest resolution image data together with vector data and/or text data. For lower memory/data storage capacity printer devices, which have not stored the highest sent resolution image data, but which have stored the lowest sent resolution image data together with vector data and text data, and one or more intermediate level resolution image data, the printer device reconstructs up to where is has data for, the highest resolution of image data which it has stored, and prints an image at that resolution.

The methods disclosed herein take into account the fact that raster images may be processed and stored before any vector data or text data are received from a data source.

According to a first aspect of the present invention there is provided a method of transmitting print data, said method comprising the steps of: for a frame of image data; sending a first layer of said image data, said first layer comprising a first amount of pixel data at a first resolution; sending an overlay data describing print features overlaying said frame of image data and not described in said frame of image data; and sending a second layer of said image data, said second layer of image data comprising a second amount of pixel data at a second resolution.

According to a second aspect of the present invention there is provided a method of generating a print data file from a received multi-resolution image data file, said method comprising the steps of: receiving said multi-resolution image data file comprising a plurality of layer of image data within a same frame, wherein each said layer of said plurality comprises image data at a different resolution to that of each other said layer in said image data file; storing at least one of said image data layers until a predetermined memory capacity is occupied by said at least one image data layers; receiving an overlay data describing features within said image data frame not described in said plurality of image data files; and generating said print data from said received image data file and said overlay data.

According to a third aspect of the present invention there is provided an image data file format comprising: a first data field containing a first level of image data at a first resolution; a second data field containing overlay data describing features not contained within said first data field; at least one further data field containing further image data at a higher resolution than said first image data.

According to a fourth aspect of the present invention there is provided a printer driver for driving a printer device, said printer driver comprising: a sampler for sampling pixels of a two-dimensional array of pixel data; a file formatter for formatting an image data file into a format comprising a first sampled image data field for containing first image data at a relatively low resolution, and a second sampled image data field for containing second image data having a relatively higher resolution, and an overlay data field for containing overlay data representing features not contained in said sampled image data, and which overlay said image data.

According to a fifth aspect of the present invention there is provided a printer device comprising:
a printing mechanism;
a memory device;
said printer device operable to:
   receive at least one raster image date file;
   store at least one raster image data file in said memory device; and
   print an image from said at least one raster image data file stored in said memory device,
   said received raster image data file being one of a series of raster image data files each describing the same image and having different resolution levels ;
wherein the resolution of the printed image depends upon the resolution of one of the series of raster image data files having the highest resolution of those raster image data files of the series which can be stored in said memory device.

According to a sixth aspect of the present invention there is provided a method of operation of a printer device comprising:
a printing mechanism;
a memory device;
said method of operation comprising:
   receiving at least one raster image data file;
   storing said at least one raster image data file in said memory device; and
   printing an image from said at least one raster image data file stored in said memory device,
   said received raster image data file being one of a series of raster image data files each describing the same image and having different resolution levels ;
wherein the resolution of the printed image depends upon the resolution of one of the series of raster image data files having the highest resolution of those raster image data files of the series which can be stored in said memory device.

### Brief Description of the Drawings

For a better understanding of the invention and to show how the same may be carried into effect, there will now be described by way of example only, specific embodiments, methods and processes according to the present invention with reference to the accompanying drawings in which:
Fig. 1 illustrates schematically a known prior art printer device receiving print image data from a known print image data source;
Fig. 2 illustrates schematically components of a printer device of print image data source according to a specific implementation of the present invention;
Fig. 3 illustrates schematically a pixel array of image data at high resolution;
Fig. 4 illustrates schematically a first level of image data transmitted according to a specific method of the present invention;
Fig. 5 illustrates schematically a second level of image data transmitted according to a specific method of the present invention;
Fig. 6 illustrates schematically a third level of image data transmitted according to a specific method of the present invention;
Fig. 7 illustrates schematically an image data file sent from an image data source to a printer device, according to a specific method of the present invention;
Fig. 8 illustrates schematically processes carried out by the source image data device, for example a computer, for constructing an image data file for sending to a printer;
Fig. 9 illustrates schematically further process steps carried out at the image data source device for sending a multi-resolution image data file to a printer device;
Fig. 10 illustrates schematically an example of a segment of a pixel array in low resolution format, received by a printer device;
Fig. 11 illustrates schematically a further segment of a pixel array, corresponding to the pixel array of Fig. 10, produced by a printer device from the low resolution image data of Fig. 10, according to a simple pixel replication algorithm in a form suitable for raster image processing;
Fig. 12 illustrates schematically process steps carried out by a printer driver within a printer device, for generating raster image data and producing a print from said raster image processed data, based upon a multi-resolution image data file received from an image file source device; and
Fig. 13 illustrates schematically a further process for interpolating received low resolution image data to produce a full pixel image data from a multi-resolution data file received from an image data source device.

### Detailed Description of the Best Mode for Carrying Out the Invention

There will now be described by way of example the best mode contemplated by the inventors for carrying out the invention. In the following description numerous specific details are set forth in order to provide a thorough understanding of the present invention. It will be apparent however, to one skilled in the art, that the present invention may be practiced without limitation to these specific details. In other instances, well known methods and structures have not been described in detail so as not to unnecessarily obscure the present invention.

In the best mode implementation, different printer devices have different amounts of memory and hard disk drive storage for storing raster data. Lower specification printers having lower amounts of memory and/or data storage are able to print less raster data than higher specification printers having higher amounts of memory and/or data storage. In each case, a printer is able to print a whole raster image, but with the level of print detail being determined by the memory and data storage capabilities of the printer. Lower specification printers print lower resolution images whereas higher specification printers print higher resolution images.

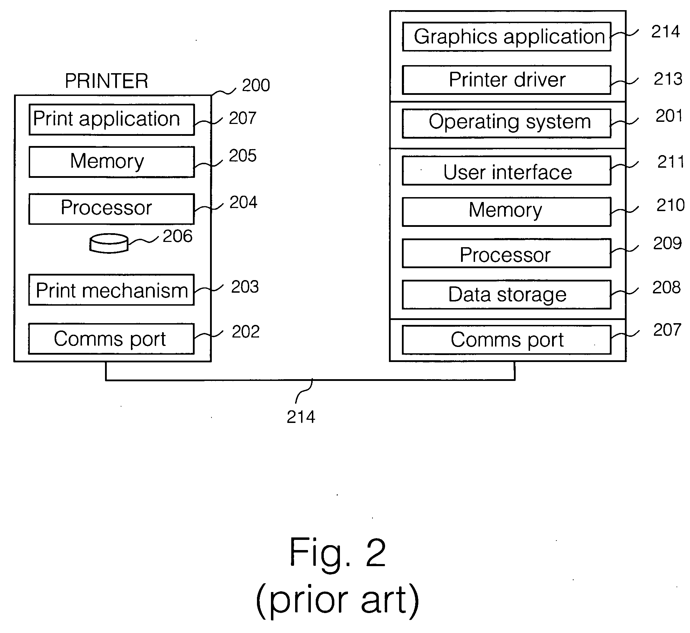

Referring to Fig. 2 herein there is illustrated schematically a printer device 200 and print data source 201, for example a computer according to a specific implementation of the present invention. The printer device 200 comprises: a communications port 202; a print mechanism 203; a processor 204; a memory 205; optionally a hard disk drive data storage device 206; and a print application 207.

The print data source 201 comprises: a communications port 207; a data storage device, for example a hard disk drive 208; a processor 209; a memory area 210; a user interface 211, for example comprising a video monitor, keyboard for data entry and pointing device e.g. mouse or the like; an operating system 212, for example the known Windows® 2000 NT, Unix®', Linux®, or the like; a printer driver according to a specific implementation of the invention, and a graphics application, for example Autocad®, architectural drawings package, Corel Draw® or any other application capable of generating image data including photograph image data, line drawing image data or rendered image data. Communication between the print data source and the printer device is via a local area network cable 214 or similar.

The printer device 200 operates the print application written 206 in a known printing language for example HPGL2 which is capable of handling bitmaps and vectors, or for example HP Raster Transfer language (HPRTL) which is capable of receiving bitmap data in rastered form. The function of the print application 206 is to convert the print data into a form in which the print mechanism can produce a printed image from a rendered image data.

Typically, a range of printer devices, sold at different costs, may have different memory or data storage capacities as follows:
Printer model 1 - 32 MegaByte (RAM)
Printer model 2 - 64 MegaByte (RAM)
Printer model 3 - 128 MegaByte (RAM)
Printer model 4 - 64 MegaByte (RAM) plus hard drive
Printer model 5 - 128 MegaByte (RAM) plus hard drive

Image data is sent by the print data source 201, without prior knowledge of the printer memory size, in a layered data density manner. The data is sampled at different resolutions at the send device, and sent in layers of successively higher resolution. The image data file which is sent from the print data source 201 is the same, whatever printer is receiving the file, so there is no need to change the format of sending image data depending upon the type of printer to which the data is being sent.

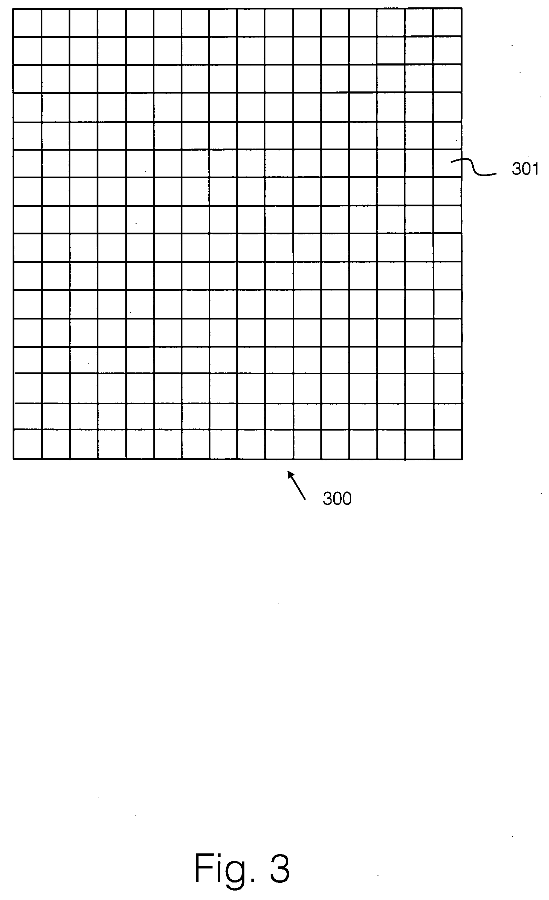

Referring to Fig. 3 herein there is illustrated schematically a 32 x 32 pixel array 300 of part of a frame of image data. Each pixel 301 is represented by a red, green, and blue data, having a 16 bit format giving 2¹⁶ level intensity information, represented as 6 Bytes of data, giving 6 KiloBytes of data for the whole 32 x 32 array of pixels. A full resolution image data frame at the print data source is made up of many such pixels in a large two-dimensional array.

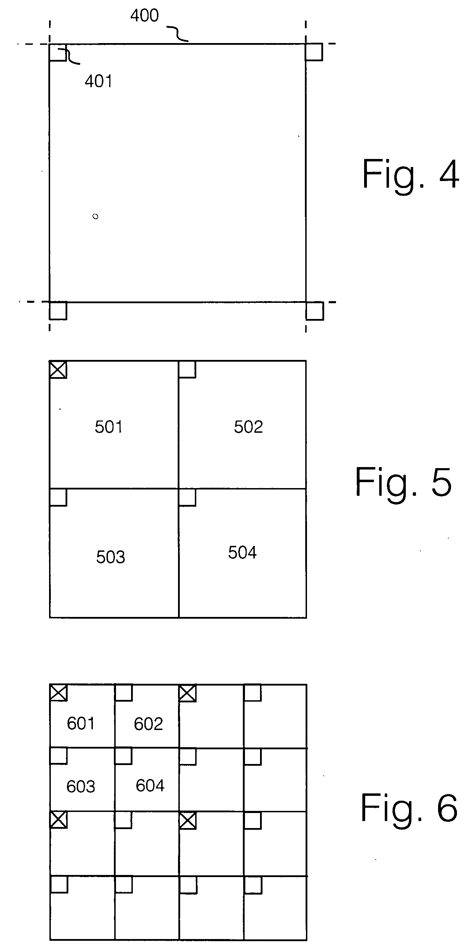

Referring to Fig. 4 herein, there is illustrated schematically a first level frame (level 1 resolution) of image data sent from the print data source to the printer device. Data representing a single pixel 400 of the 32 x 32 array is sent as representing the whole of that array. That is, out of the 1024 pixels in the 32 x 32 array, only 1 pixel is sent, in the example shown, being a pixel in a top left hand corner of the two-dimensional array.

Referring to Fig. 5 herein, there is illustrated schematically a next level resolution frame (level 2) of image data sent by the print data source device. The pixels marked with a cross are already sent. The other pixels shown are sent at level 2. At the next level, out of the 32 x 32 array, pixels are selected which in this case spatially are at points approximately midway between the first pixel sent 400, and corresponding pixels of adjacent data arrays around the first data array 300. The 32 x 32 array 400 is divided into 4 equal quadrants 501-504, and in each quadrant, a single pixel is selected, at a same relative position within each of the three quadrants for which no pixel data was sent at level 1. Therefore the information density at level 2 is 3 times the information density at level 1, because 3 pixel data are being sent instead of 1 pixel data, for the same area of image. However, the second level data is still relatively low resolution, since only 3 out of the possible 1024 pixel data per array are sampled.

Referring to Fig. 6 herein, there is illustrated schematically a level 3 image data. The pixels shown with a cross are already sent at levels 1 and 2. The other pixels shown are sent at level 31n the level 3 data, each quadrant 501-504 is further divided into 4 sub-quadrants. For example, first quadrant 501 is divided into first sub-quadrants 601-604, so that 12 remaining pixels at that resolution are uniformly distributed throughout the two-dimensional area of the 32 x 32 pixel array 400. The level 3 pixels supplement and are additional to lower level pixels at level 1 and level 2.

Further levels of data may be sent by the print data source device by subdividing each sub-quadrant into 4 sub-areas, and then at the next level dividing each of those sub-areas into 4 sub-sub-areas, and so on until a full resolution image data of 1024 pixels has been sent, accounting for all the levels sent.

Therefore, all pixels of the original image data are sent only one, and in different levels of pixel data.

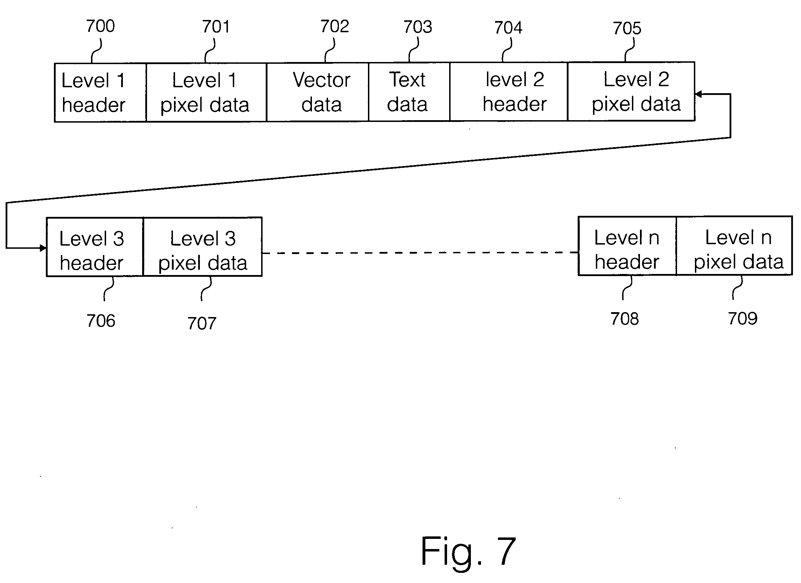

Referring to Fig. 7 herein, there is illustrated schematically a print data file transmitted between an image data source and a printer device according to the specific implementation of the present invention. The file comprises a first level header field 700 indicating that first level data will follow; first level pixel data field 701, containing pixel data in a lowest resolution format; a vector data field 702 containing vector data describing any vector information such as arrows, lines, as is known in the prior art; a text data field 703 containing text data describing text information, for overlay on top of the pixel data, as is known in the art; a level 2 header data field 704 indicating that level 2 data follows; a second image data field 705 containing second level 2 pixel image data, having higher resolution than the corresponding level one image data 701; a level 3 header data field 706 indicating that level 3 image data follows; a level 3 image data field containing level 3 image data 707 of higher resolution than the level 2 image data 705; followed by further level header fields for different levels of image data, and further higher level image data fields having successively higher resolutions of image data and terminating in a highest level (level N) header field and level N image data field, having a highest level resolution of image data sent.

For example, where a 2400 DPI image data is being sent to a printer, according to the best mode method herein there may first be sent a low resolution layer of image data, for example 150 DPI, followed by a vector data field and a text data field. The next image data field sent may then contain a 300 DPI layer of image data which combined with the level 1 image data gives level 2 resolution image data. The level 2 resolution image data may be followed by a third layer of resolution image data which combined with the layer 1 and layer 2 data gives 600 DPI. Subsequent layers may be sent to give, when combined with previous layers, 1200 DPI and 2400 DPI, that is, the full maximum resolution of the image data. Each dot is represented as a pixel of data having RGB information, and intensity level information, for example a 16 level quantized intensity data.

A printer receiving the multi-resolution data file can print an image at any of the received resolutions, and include the vector data and text data, provided that particular resolution level of image data plus vector and text data will fit into the memory or data storage space of the printer. The resolution of the printed image is limited by the memory and/or data storage capacity of the printer in circumstances where this is insufficient capacity to contain the highest received resolution of image data.

For a very large memory/data storage capacity printer, the highest resolution image data may be stored, and in this case the resolution of the printed image is limited by other factors, ie the print mechanism, or the highest resolution of image data sent by the data source, rather than the memory or data storage capacity of the printer device.

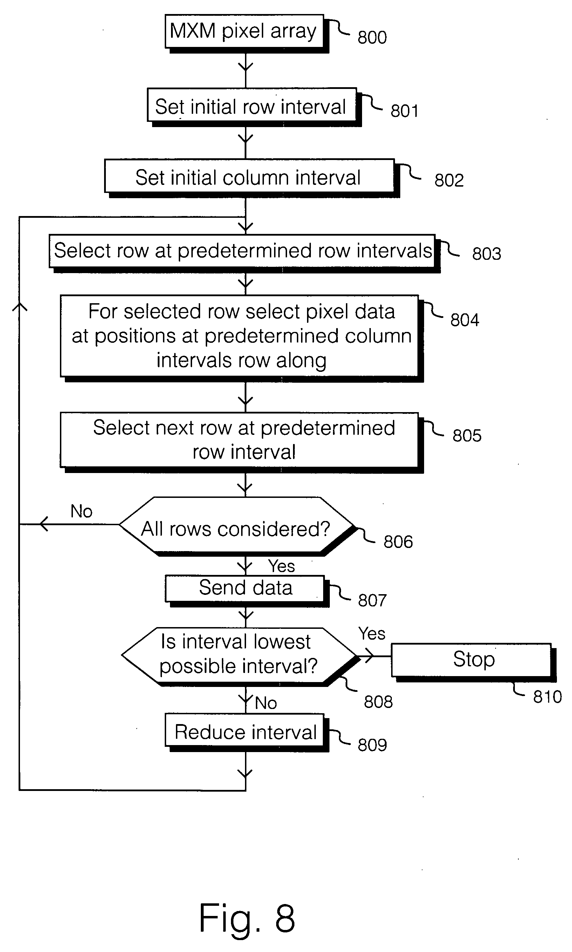

Referring to Fig. 8 herein, there is illustrated schematically process steps carried out by the print data source computer for sending print data in the format described in Figs. 4 to 7 herein.

An MxM pixel array 800 contains high resolution pixel data to be transmitted according to a multi-resolution format. In step 801 an initial row interval is set, being an interval at which rows of the source image data pixel array are selected for initial transmission. In step 802 an initial column interval is set, being an interval between selected columns of the source image data. For example in the first instance where an image of dimensions 107 CM x 147 CM is to be sent, having 2400 dots per inch (893025 dots per cm²), then each cm² of image may have 945 rows and 945 columns of pixels. An initial row interval may be set at for example every 36 rows. An initial column interval may be set at for example every 36 columns, that area is sent, to be representative of all pixels within that area in a level 1 lowest resolution image data. For each selected row (in the example given at level 1) the 36^{th}, 72^{nd}, 108^{th} .... etc row, in step 805 individual pixels are selected at positions determined by the predetermined column interval for the first level, along the row. In this case, the zeroth, 35^{th}, 71^{st}, 107^{th} etc pixels in a first direction along the row are selected. In step 806, the next row is selected, for example the 35^{th} row at the first level resolution, and in step 807 it is checked whether all possible rows in the image at the first level have been so far considered. If not, then the algorithm repeats steps 804-806, for each row in the image, so that the result of a level 1 image scan is that a course grid of pixels representative of the image data has been sampled. In the level 1 example mentioned above, where every 36^{th} row and column is selected, an individual pixel at every intersection of the selected rows and columns at the 36^{th} row and 36^{th} column intervals form the level 1 image data.

When a complete level of image data has been sampled, in step 807 the level data for that level is sent to the printer. In step 808 the row and column intervals are examined to see if they are the lowest possible row and column intervals. If not, then in step 809 the row and column intervals are reduced. Typically, in a best mode implementation the row and column intervals may be reduced by half. Therefore if the first level row and column interval are each 36, then after the first reduction (level 2 image data) the row and column intervals will be each set at 18, thereby selecting every 18^{th} row and every 18^{th} column, in order to transmit pixel data of the pixels located at the intersections of every 18^{th} row and 18^{th} column across the entire array except for the pixels which have already been sent. Steps 804-807 repeat for the level 2 image data until, in step 807 all rows and columns have been considered in the level 2 image scan in which case it is again checked in step 808 whether the interval is the lowest possible interval. If not, then instep 809 the row interval and column interval are each reduced, again by a factor of 2, so that at the third level every 9^{th} row and every 9^{th} column are selected, and pixels present at the intersection of each 9^{th} row and 9^{th} column across the entire array are sampled as a third level resolution image data, except for the pixels already transmitted.

The operation of steps 803-808 continues until a lowest possible interval has been selected (that is every individual row and every individual column has been selected) and data has been sent. In practice, step 807 of sending data may occur in parallel to the operation of the other process steps in Fig. 8, so that as data is read from the stored high resolution pixel array, the data may be transmitted from the image source device.

Sending data after every level of pixel data is generated reduces overall printing time, as the printer receives a continuous stream of image data.

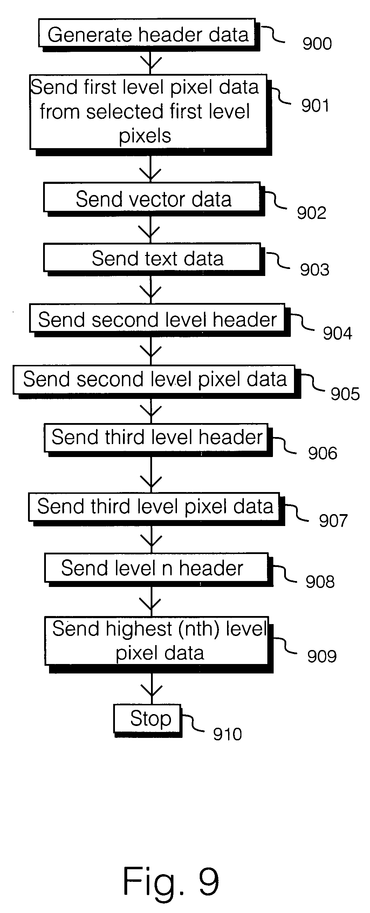

Referring to Fig. 9 herein, there is illustrated schematically process steps carried out by the computer image source for sending the multi-resolution image data file of Fig. 7. In step 900, level header data is generated, containing data specifying that a multi-resolution format will follow, and specifying the first resolution level. In step 901, the first level image data is sent from a computer source, comprising the selected first level pixels. In step 902, vector data is sent in a vector field 702 as herein before described. In step 903, text data describing any text additions to the image is sent in a text data field 703 as herein before described. In step 904 second level header data is sent indicating second level image data will follow. In step 905, the second level image data, at a higher resolution than the first level image data is sent. In step 906, a third level header data is sent indicating third level resolution pixel data will follow and in step 907, third level resolution image data is sent, being of a higher resolution than the first level or second level image data. Successive levels of image data, each preceded by a header data are sent until the highest resolution level (level N) image data is sent.

It would be appreciated that successive levels of resolution of image data are sent, up the maximum resolution obtainable from the source image data. Therefore, the process steps through sending level 1, level 2, level 3 .... level N resolutions of image data and stops, when the maximum resolution permitted by the source image data has been reached.

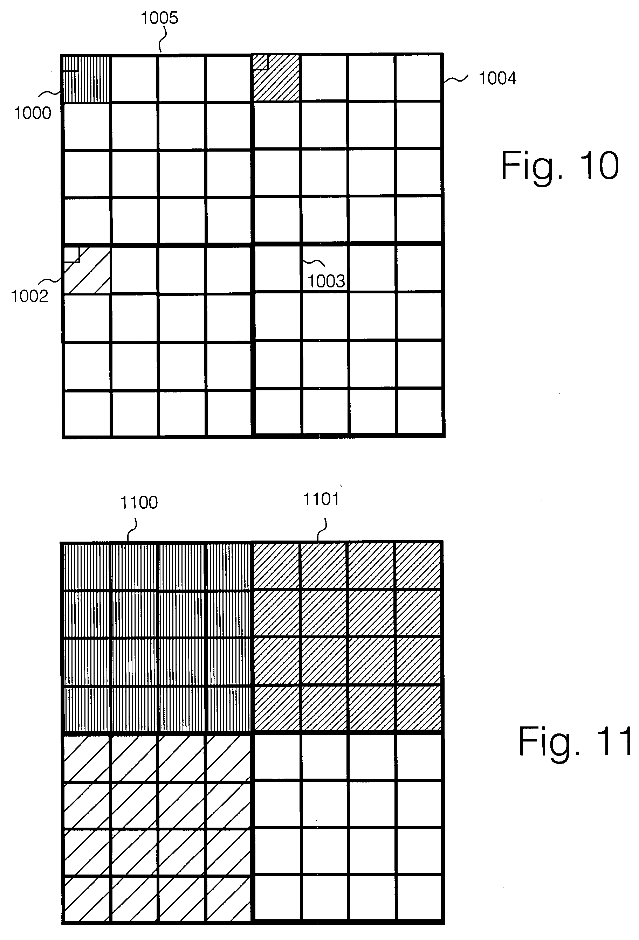

Referring to Fig. 10 herein, there is illustrated schematically a data processing step prior to rastering and printing of the print image. Illustrated schematically in Fig. 10 is pixel data received at below maximum resolution, as stored by the printer device. First to fourth pixels 1000-1003 received from the image data source are representative of a higher resolution source image comprising a grid of vacant pixel data sites 1004. For example a single pixel data may represent an NxN section. In the example of Fig. 10, a single pixel 1000 represents a 4x4 section of pixels, and represents a simple form of interpolation.

The printer device operates an algorithm which makes the basic assumption that image data is received in the form of individual tone and color information pixel data, for selected pixels in a pixel grid, with gaps in information for individual pixel spaces. For example where a single pixel color and tone data is received for one pixel in an NxN grid of pixels, then the printer device assumes that all pixels within that NxN grid have the same coloring and tone. The resolution of the pixel data received is identified by the incoming print data, so the printer device can assess the number of pixel locations in a complete source image frame.

Referring to Fig. 11 herein, there is illustrated schematically a graphical representation of high density image data filled in from the low resolution pixel data shown in Fig. 10. An NxN grid of pixels are colored and shaded with the same coloring and shading data as a single pixel 1000 placed in a corner of that NxN array. Similarly for an adjacent NxN array 1101, all pixels in the NxN segment are shaded with the same tone and color as a representative pixel 1001 in a corner of that grid. Similarly, across a whole image plane comprising a grid of pixels, within each individual NxN grid, a single pixel data within that grid for which data has been received is tiled across all pixel locations within that NxN grid.

Figs. 10 and 11 show a simple form of pixel replication, involving only one pixel at a time in each of a plurality of quadrants.

Other types of interpolation which are known in the art may also be applied including:
- Bi-linear interpolation in which there is first a linear interpolation on one axis and then in the other axis. This involves two pixels at a time.
- Bi-cubic interpolation. This takes into account more than 2 pixels at each time and attempts to interpolate the pixels with a higher order polynomial.
- High pass filtering, plus bi-cubic interpolation which usually gives better results, more pleasing to the human visual system.

In principle, any known bi-dimensional interpolation method may be applied for rendering the image.

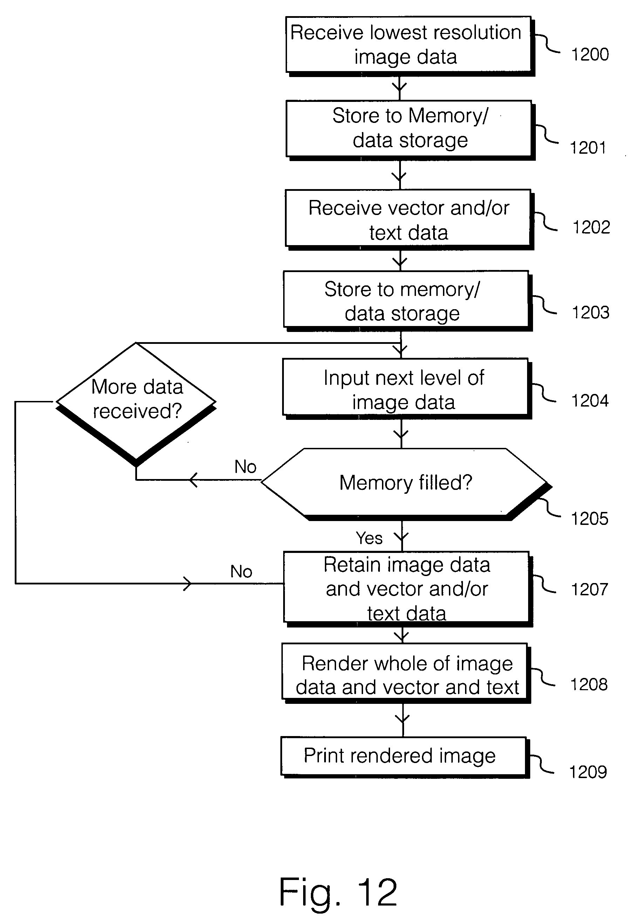

Referring to Fig. 12 herein, there is illustrated schematically one example of a process carried out by a novel printer application 206, which can be installed into a printer, to implement receiving and printing of the multi-resolution image data file according to a specific method of the present invention. The process is implemented as an algorithm within the print application, which can be loaded into a conventional printer as computer program code, causing the conventional printer to operate in a new manner for performing a specific method according to the present invention.

In step 1200, the printer device begins to receive the data file sent by the image data source, commencing with a level 1 header 700 indicating that the image data file is of a multi-resolution type, followed by the lowest level resolution (level 1) image data 701. The lowest resolution image data is stored to the internal memory and/or data storage device of the printer device in step 1201. In step 1202, a vector field 702 of the data file is received and any vector data contained within that vector field is stored in memory in step 1203. Similarly, either serially or in parallel, a text data field 703 of the data file is received and stored in the memory/data storage area of the printer. At this stage, depending upon the memory/data storage capacity of the printer, there may be enough memory space left to store the next level resolution (level 2) of image data, or not as the case may be. The next level resolution image data is input in step 1204. If in step 1205 this level of image data can be stored to memory without overwriting previously stored data, then in step 1206, the printer continues to receive the next resolution level of data (level 3). However, if in step 1205 the printer device determines that a currently received resolution level of image data cannot be stored without overwriting previously received image data at lower resolution, then, depending upon the particular implementation in the printer the printer can either not store the currently received image data (level 3 resolution) in which case this data will be dropped on receipt, or the printer may attempt to store parts of that currently received image data (level 3 resolution) to use at whatever spare memory space is available, but without storing the whole of the currently received level of image data. In a basic implementation, the printer simply drops the currently incoming level of image data when the memory is full to its predetermined limit, and in step 1207, retains the previously received image data (level 2 resolution) plus any vector data and text data in memory and uses this as the basis for producing a printed image. In step 1208 the highest level resolution image data retained (level 2 in this case) plus the vector data and text data are raster image processed, and in 1209 the raster data is printed to produce the final print image.

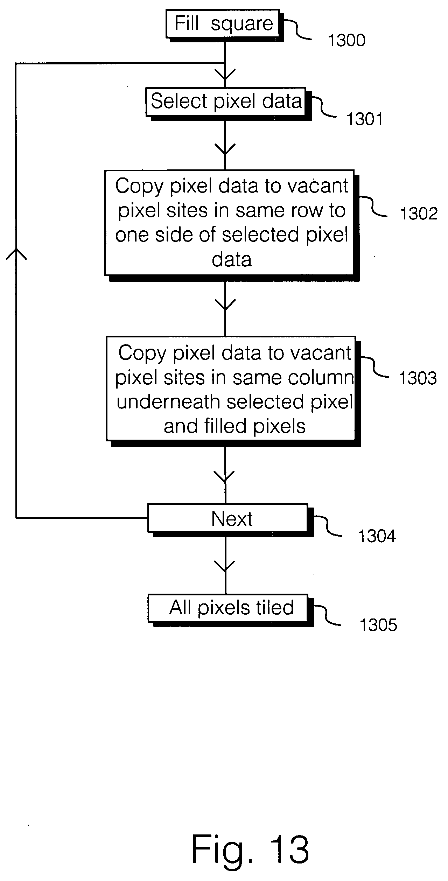

Referring to Fig. 13 herein, there is illustrated schematically process steps for one type of single interpolation carried out by the print driver for generating print data for printing, from the received image data. The process fills a square 1005 of adjacent pixel locations from a single pixel data 1000 by interpolating that pixel data to adjacent vacant pixel locations. In step 1301, from the array of received pixel data, the algorithm selects a first pixel data. In step 1302 the algorithm locates any vacant pixel sites along a same row as a pixel data 1000, between the pixel data and an adjacent pixel data 1001 next to the pixel data 1000. The algorithm fills the vacant pixels in the same row with the same pixel data as the first pixel. In step 1303 for each pixel data filled along the row up until a next pixel data, the algorithm fills down any vacant pixel data in each column headed by the pixel data or a filled pixel data, down until a next row containing an adjacent pixel data 1002, 1003. At this stage, a single pixel data has been tiled across individual rows and columns in a section of the grid, extending up to but not including any adjacent pixels for which data has already been received from the data source.

In step 1304, the algorithm proceeds to select a next pixel in the array for which data has been received, and steps 1301-1303 are repeated for the next pixel, in order to tile the color and tone data of the next pixel across a corresponding section of the grid in first and second directions from the next pixel, up to but not including an adjacent row and column containing further received pixel data.

The algorithm continues, until all individual pixels for which data has been received from the data source has been tiled over their corresponding adjacent areas in step 1305.

The specific implementation may have the advantage of overcoming the prior art problem of printing image background data, but missing out vector and text data, due to memory overflow problems.

The specific implementations may allow printing of high resolution vector and text data, on a printer device having a limited memory area, where a background image is rendered with a resolution which is limited by an available memory capacity or data storage capacity of the printer device. For example, an architect's drawing may comprise an aerial photograph of a landsite, together with an architectural drawing, specified in vector data, plus some text data overlaying the aerial image. The resolution of printing of the aerial image may be limited by the printers memory, but the resolution of the architectural drawing and text data, are not limited by the memory or data storage capacity of the printer device, but are always printed in very high resolution, for example using the HPGL2 vector graphics language.

The same image data file sent to a different printer having a higher memory capacity and/or data storage capacity, may provide a higher resolution background image data, and with vector and text data information at the same resolution as the lower memory capacity/data storage capacity printer device.

Specific implementations of the present invention may allow conventional printer devices to be adapted, by introduction of a replacement driver implementing the methods according to the present invention to handle image data source files of a large size, having high resolution data, by printing image data at lower resolution, but maintaining high resolution vector and text data in a final printed image.

Specific implementations of the present invention may solve many situations where currently, prior art printers will not print vector and/or text data over already printed image data, because of memory overflow caused by the large size of prior art higher resolution image data files.

The specific implementations may also solve the prior art problem where a graphics application sends image data bottom-up, and where prior art printer devices will not print the whole of the image due to overflow of memory capacity and inability to store the top half of the image data prior to commencing printing.

## Claims

1. A method of transmitting print data, said method **characterised by** comprising the steps of:
for a frame (300) of image data;
sending a first layer (400, 701) of said image data, said first layer comprising a first amount of pixel data at a first resolution;
sending an overlay data (702, 703) describing print features overlaying said frame of image data and not described in said frame of image data; and
sending a second layer (500, 704) of said image data, said second layer of image data comprising a second amount of pixel data at a second resolution.

2. The method as claimed in claim 1, wherein said overlay data comprises:
vector data information (702) describing geometric features in a vector format.

3. The method as claimed in claim 1, wherein said overlay data comprises:
text data (703) describing text characters.

4. The method as claimed in claim 1, wherein said second layer (500, 704) of pixel data contains additional pixels to said first layer of pixel data such that said first and second pixel data combine to give a higher resolution image than said first pixel data alone.

5. The method as claimed in claim 1, wherein said second layer (500, 704) of pixel data is of a higher resolution that said first layer of pixel data.

6. A method of generating a print data file from a received multi-resolution image data file, said method **characterised by** comprising the steps of:
receiving (1200, 1204) said multi-resolution image data file comprising a plurality of layer of image data within a same frame, wherein each said layer of said plurality comprises image data at a different resolution to that of each other said layer in said image data file;
storing (1201, 1205) at least one of said image data layers until a predetermined memory capacity is occupied by said at least one image data layers;
receiving (1202) an overlay data describing features within said image data frame not described in said plurality of image data files; and
generating said print data (1208) from said received image data file and said overlay data.

7. The method as claimed in claim 6, wherein said step of generating said print data comprises:
selecting a highest resolution layer of image data (1301) stored in a memory area;
for each pixel of said image data layer, interpolating (1302, 1303) a pixel data of said pixel over a plurality of adjacent pixel locations within said frame.

8. The method as claimed in claim 7, wherein said step of interpolating said pixel data over a plurality of adjacent pixel positions comprises:
filling said pixel data along at least one vacant pixel location in a same row as said pixel data (1302).

9. The method as claimed in claim 6, wherein said step of interpolating said pixel data over a plurality of adjacent pixel positions comprises:
filling said pixel data along at least one vacant pixel location in a same column as said pixel data (1303).

10. The method as claimed in claim 6, wherein said step of generating said print data from said received image data file comprises selecting a highest resolution layer of image data stored in a memory area; for each pixel of said image data layer, applying a bi-dimensional interpolation of said pixel over a plurality of adjacent pixel locations.

11. The method as claimed in claim 10, wherein said bi-dimensional interpolation is selected from the set:
a linear interpolation along a first axis, and a second linear interpolation along a second axis;
a bi-cubic interpolation which interpolates two pixels at a time with a higher order polynomial;
a high pass filtering plus bi-cubic interpolation.

12. An image data file format **characterised by** comprising:
a first data field (701) containing a first level of image data at a first resolution;
a second data field (704, 707, 709) containing overlay data describing features not contained within said first data field;
at least one further data field containing further image data at a higher resolution than said first image data.

13. The image data file format as claimed in claim 10, wherein said second data field comprises a vector data field containing vector data.

14. The image data file format as claimed in claim 10, wherein said second data field contains a text data describing text.

15. The image data file format as claimed in claim 10, wherein said at least one further data field comprises a plurality of image data fields each containing successively higher resolution image data.

16. A printer driver for driving a printer device, said printer driver **characterised by** comprising:
a sampler for sampling pixels of a two-dimensional array of pixel data;
a file formatter for formatting an image data file into a format comprising a first sampled image data field for containing first image data at a relatively low resolution, and a second sampled image data field for containing second image data having a relatively higher resolution, and an overlay data field for containing overlay data representing features not contained in said sampled image data, and which overlay said image data.

17. The printer driver as claimed in claim 12, wherein said overlay data field comprises:
a vector data field for containing vector data.

18. The printer driver as claimed in claim 12, wherein said overlay data field comprises:
a text data field for containing text data.

19. The printer driver as claimed in claim 17, wherein:
said sampler operates to sample individual pixels of said two-dimensional array of pixels, with a variable sample rate.

20. The printer driver as claimed in claim 12, wherein:
said sampler operates to sample a first layer of pixels of said two-dimensional array of pixel data, to generate said first sampled image data; and
sample a second layer of pixels of said two-dimensional array of pixel data, to generate said second sampled image data.

21. A printer device **characterized by** comprising:
a printing mechanism;
a memory device;
said printer device operable to:
receive at least one raster image data file;
store said at least one raster image data file in said memory device; and
print an image from said at least one raster image data file stored in said memory device,
said received raster image data file being one of a series of raster image data files each describing the same image and having different resolution levels ;
wherein the resolution of the printed image depends upon the resolution of one of the series of raster image data files having the highest resolution of those raster image data files of the series which can be stored in said memory device.

22. The printer device as claimed in claim 21 configured to operate to:
receive said raster image data until a pre-determined data storage capacity of said memory device is occupied by said raster image data; and
print image data from said stored raster image data once said pre-determined limit is reached.

23. The printer device as claimed in claim 21 or 22, configured to print vector data combined with said image.

24. A method of operation of a printer device **characterised by** comprising:
a printing mechanism;
a memory device;
said method of operation comprising:
receiving at least one raster image data file;
storing said at least one raster image data file in said memory device; and
printing an image from said at least one raster image data file stored in said memory device,
said received raster image data file being one of a series of raster image data files each describing the same image and having different resolution levels ;
wherein the resolution of the printed image depends upon the resolution of one of the series of raster image data files having the highest resolution of those raster image data files of the series which can be stored in said memory device.

25. The method as claimed in claim 24, further comprising the step of:
receiving said raster image data until a pre-determined data storage capacity of said memory device is occupied by said raster image data; and
printing image data from said stored raster image data once said pre-determined limit is reached.

26. The method as claimed in claim 24 or 25, wherein said step of printing an image comprises:
printing vector data combined with said image.
